(19) Europäisches Patentamt
European Patent Office
Office européen des brevets

(11) **EP 2 498 050 A2**

(12) # EUROPEAN PATENT APPLICATION

(43) Date of publication:
**12.09.2012 Bulletin 2012/37**

(51) Int Cl.:
***G01C 17/34*** *(2006.01)*

(21) Application number: **12155808.4**

(22) Date of filing: **16.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.03.2011 GB 201103994**

(71) Applicant: **Instro Precision Limited Broadstairs Kent CT10 2YD (GB)**

(72) Inventor: **Morcom, Christopher John Broadstairs, Kent CT10 2YD (GB)**

(74) Representative: **Greene, Simon Kenneth Elkington and Fife LLP Prospect House 8 Pembroke Road Sevenoaks Kent TN13 1XR (GB)**

(54) **Digital Solar Compass**

(57) A digital solar compass has a planar image sensor (5) for capturing an image of a gnomon (1) perpendicular to the plane of the image sensor. A cover (12) protects the gnomon and image sensor. A signal processor (14) is arranged to determine the angle of a shadow cast by the sun and the gnomon from the image captured by the planar image sensor. The gnomon (1) may be mounted directly on the planar image sensor (5) or the shadow may be formed on a diffuser sheet (3) and projected onto the image sensor (5) using a lens (4).

Fig. 1

EP 2 498 050 A2

**Description**

Field of the invention

The invention relates to a digital solar compass, i.e. an instrument for determining the direction to the sun, whether on earth or in space.

Background Art

Determining the orientation of an object with respect to North is a very common requirement for many systems which either need to be aligned in a specific direction for correct or efficient operation; for example solar power systems and radar stations, or for remote surveillance and observation systems where knowledge of the orientation of the line of sight of the system with respect to North is required to allow the co-ordinates of a remote object to be determined, for example in surveying and security applications.

A similar requirement exists in satellites for finding the direction towards the sun to allow the satellite to be correctly oriented.

As a result many methods of "North finding" have been developed covering a range of different accuracy and price points.

One method is to use an inertial or gyroscopic compass. These methods use inertial sensors to measure the vector of the Earth's rotation and hence to determine orientation with respect to the Earth's axis of rotation: i.e. True North. Due to the low magnitude of the vector, for good accuracy such systems tend to use costly, high performance inertial sensors such as laser ring gyroscopes, fibre-optic gyroscopes and spinning mass gyroscopes and as a result are costly systems. They also tend to be sensitive to external noise and vibration during the measurement process.

Another approach is to use a magnetic compass to measure the Earth's magnetic field vector to determine the location of the earth's magnetic pole and hence orientation with respect to Magnetic North. Over the past decade, the use of digital magnetic compasses (DMC) has grown substantially, driven by low cost integrated magnetometer components, and these devices provide a cost effective solution in many applications.

The accuracy of magnetic compasses is strongly affected by the local magnetic environment, for example ferrous materials in the structure the DMC is attached to. Various calibration schemes have been implemented in an effort to calibrate out the effect of the local environment local. However these techniques can only compensate for magnetic fields which move with the DMC itself. As a result external magnetic fields, due for example, to vehicles in the vicinity of the compass or electric currents flowing in nearby electric power cables can lead to significant errors, which limit the usefulness of magnetic compass solutions.

A third approach is known as solar or celestial Northing. Solar or Celestial Northing methods use an optical device which is sighted on a known heavenly body (such as the sun, moon, planets or star). Knowledge of the current time and the movement of specific heavenly body can then be used to calculate the orientation of the line of sight. This technique is ancient and can provide very accurate results. In more recent times, electronic imaging systems have been used to capture an image of the sky and then through digital image processing to extract the orientation of the focal plane of the imaging system.

Due to the cost of such systems, their use has tended to be restricted to aircraft or other expensive infrastructure or vehicles where the accuracy requirements justified the expense. However, significant reductions in the cost of imaging and digital signal processing have rendered this a more viable option for lower cost systems, particularly where operation is only required during the daytime as this avoids the need for expensive imaging systems with sufficient sensitivity to be able to image low intensity heavenly bodies such as stars.

Nonetheless, such systems are still relatively costly. A significant cost driver is the need for a very high quality, fish eye optic to deliver a distortion free, wide angle image of the sky as any shift in the apparent position of the sun due to lens distortion translates directly to an error in the computed orientation. In addition, because the angle subtended by the sun is just 0.5° in comparison to the 180° of the whole sky field of view, a high resolution image sensor is required to deliver accurate results.

The website http://www.isa.org/journals/intech/solarcompass.pdf proposes a solar compass chip, using a pinhole array and a focal plane array. However, the reported results reveal that the time for data acquisition using this approach is very long - the paper states that "it is observed that coarse estimates of the Earth rotation axis is available after approximately 10 minutes of observation and observing the Sun for a few hours will determine the Earth rotation axis to a small fraction of a degree." Most applications require reliable results very much more quickly than this.

Accordingly, there remains a need for a digital solar compass that can acquire results in a reasonable time frame, and at reasonable cost.

## Summary of Invention

According to the invention, there is provided a digital compass according to claim 1.

The inventor has realised that this alternative approach eliminates the need for expensive optics, significantly reducing the cost of creating a practical digital solar compass (DSC). In addition, a further enhancement of this new approach eliminates the need for any optical components at all, offering the prospect of implementing a digital solar compass using very low cost, integrated circuit technology.

The speed of data acquisition can be fast. An early prototype can achieve accuracies of fractions of a degree with a single image captured in a small fraction of a second.

The digital compass may be combined with other components such as an inertial measurement unit (IMU) or digital magnetic compass (DMC). Surprisingly, the digital compass as claimed is sufficiently accurate to be able to calibrate the IMU and DMC.

The invention also relates to a method of determining the angle of the sun with respect to a digital solar compass having a planar image sensor and a gnomon extending perpendicular to the plane of the image sensor according to claim 13.

In another aspect, there is provided a method of determining the angle of the sun with respect to a digital solar compass having a planar image sensor and a gnomon extending perpendicular to the plane of the image sensor; the method comprising:

forming a shadow of the gnomon on the image sensor;

capturing the image on the image centre;

calculating the locus of a circle around the centre of the image of the base of the gnomon;

determining the intensity around the loop; and

determining the angle of the shadow from the intensity around the loop.

## Brief description of drawings

Embodiments of the invention will now be described, purely by way of example, with reference to the accompanying drawings, in which:

Figure 1 shows a first embodiment of the invention;

Figure 2 shows a second embodiment of the invention;

Figure 3 is a flow chart showing the data processing used in both the first and second embodiments;

Figure 4 is an image captured using the invention; and

Figure 5 illustrates the method for locating the direction of the sun from the image of Figure 4.

Figures 6 and 7 are graphs showing the accuracy of results achieved using a prototype.

## Detailed Description

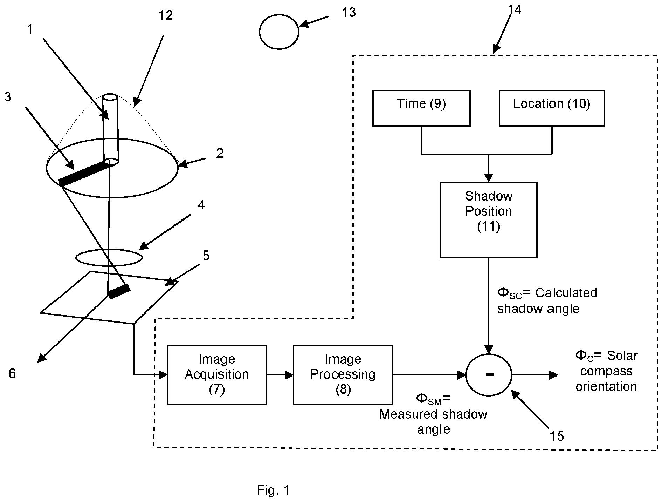

Referring to Figure 1, a gnomon (1) is mounted on top of a thin sheet of diffuser material (2) so that rays from the sun (13) cast a shadow (3) on the diffuser sheet.

A lens (4) is arranged to focus and image of the shadow cast on the diffuser sheet onto a focal plane array (5): typically a charge coupled device (CCD) or Complementary Metal Oxide Semiconductor (CMOS) image sensor. The focal plane array is fixed in relation to the mechanical reference (6) of the compass module.

A signal processor (14) includes a number of components as will now be described. These components may be implemented in hardware or software, or a mixture. For example, a hardware GPS receiver (9,10) may be provided separately as hardware. Software may be provided that, when run on a computer including a processor and memory, causes the computer to carry out the functions of the image acquisition circuitry (7), image processing circuitry (8) solar position calculation unit (11) and output unit (15). In alternative embodiments the full functionality of the signal processor (14) may be provided in software on a computer.

Image acquisition circuitry (7) drives the focal plane array and controls the sensor gain and integration time to acquire clean, properly exposed image data from the focal plane array in digital form. Image processing circuitry (8) processes the image data to extract the angle of the shadow in relation to the compass mechanical reference ($\phi_{SM}$). One method to achieve this is described in more detail below, although it will be appreciated that to those skilled in the art of image processing there are several solutions to this.

When the image of the shadow is captured, the time and location of the digital solar compass are also recorded. These will typically be provided by a GPS receiver (9,10) but could equally be derived from a real time clock (RTC) 9 and position location unit (10) which may simply use manual entry by reference to a map, for example, or other automatic location system as required.

A solar position calculation unit (11) is used to calculate the expected orientation of the sun's shadow at the time and location ($\phi_{SC}$) with respect to True North. Suitable algorithms are well known [see for example, report NREL/TP-560-34302 "Solar Position Algorithm for Solar radiation Applications" published by National Renewable Energy Laboratory, Colorado, USA] and are also able to take into account inaccuracies due to the gnomon not being perfectly perpendicular to the diffuser plane.

The difference in angle between the calculated and measured orientation of the shadow gives ($\phi_C$) the orientation of the mechanical reference of the solar compass with respect to True North. This is calculated by output unit (15) which generates the output.

In alternative embodiments, the output is simply the angle between the unit and the sun output from image processing circuitry (8). This may be suitable where the unit is fixed to a solar panel to orient the panel, where the angle between the panel and the sun is required and not simply the direction of North.

From this description, it can be seen that the lens (4) is only required to operate over a relatively narrow field of view, substantially reducing its cost in comparison to the prior art. In addition, the image of the shadow cast by the gnomon can be made to be significant in size to the focal plane array, allowing the use of relatively low resolution sensor to achieve useful angle accuracy.

A transparent cover (12), typically hemispherical in form, is provided over the gnomon and diffuser sheet to protect them from the elements and mechanical damage. Preferably, to minimise cost, this cover is a solid moulded item which also performs the functions of mechanically supporting the gnomon and diffuser sheet.

This cover may also be manufactured from materials with optical properties chosen to optimise the performance of the system, including:

a) Wavelength filtering, for example bandpass or near infra-red cut to improve the resolution of the lens/focal pane array combination; and/or

b) Neutral density filtering to match the solar illumination to the dynamic range of the focal plane array.

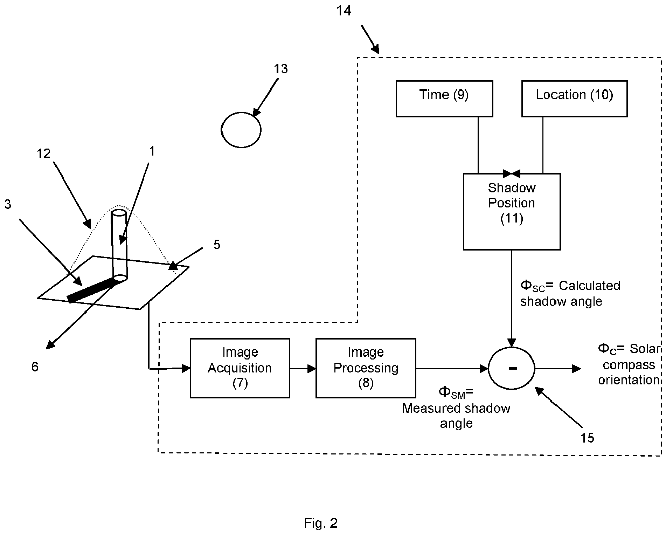

Figure 2 illustrates an alternative embodiment of the invention that will be referred to as the integrated circuit approach.

In this approach, the embodiment of Figure 1 is modified by mounting the gnomon (1) directly onto the surface of the focal plane array (5). In this case the shadow cast by the sun (13) is imaged directly by the focal plane array, eliminating the need for the diffuser and focussing lens.

This solution also allows the complete digital solar compass to be manufactured as a single CMOS integrated circuit combining the focal plane array, image acquisition, image processing and solar position calculating electronics onto a single silicon substrate to allow very low cost, high volume manufacture.

The moulded package of the integrated circuit can be used to both mount and protect the gnomon and focal plane array surface in the manner described above.

The inventors have found that by using a gnomon imaged by back projection (Figure 1) or in direct contact with a focal plane array (Figure 2) the need for expensive fish eye optics or special micro-machined masks is eliminated. These methods create an image that can be processed very simply using known image processing to yield high accuracy results very quickly. This is because the approach inherently removes all image structure (e.g. clouds) leaving only the gnomon shadow which is a well defined geometric shape with two well defined, parallel edges whose orientations are directly related to the angle of the sun and are easily computed using well known image processing techniques.

The prototype manufactured by the inventors delivers an accuracy of around 0.1 degree (1 standard deviation) from each captured video frame, at 3 measurements a second even using low grade components. Higher grade components should easily be able to capture and process an image in the time of one video frame (1/50 or 1/60 s) for real time applications on hand held equipment.

Prior art documents, such as the document mentioned above, focus on using pinholes or slits to image the sun, rather than the simple expedient of a gnomon.

The method according to the invention works very much better than such approaches in terms of rapidly finding the direction of the sun.

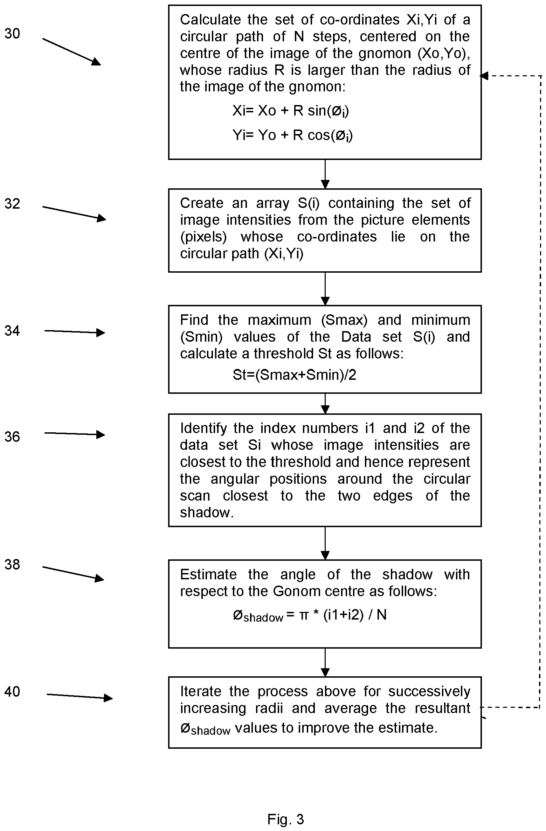

There are many approaches to calculating the angle of the shadow image with respect to the focal plane array and hence mechanical reference. One approach is outlined in Figure 3.

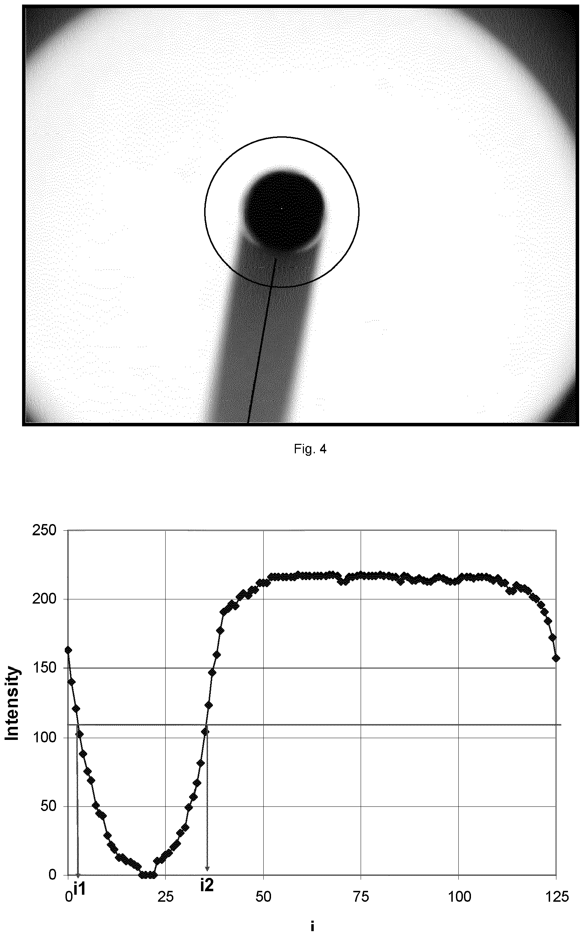

Firstly, an image is captured by image acquisition unit 7. An example image is shown in Figure 4.

The image is then processed by image processor (8) as will now be explained to measure the expected shadow angle.

In the first step (30), the set of co-ordinates Xi,Yi of a circular path of N steps is calculated, centered on the centre of the image of the base of the gnomon (Xo,Yo), whose radius R is larger than the radius of the image of the gnomon:

$$Xi = Xo + R\ sin(\varnothing_i)$$

$$Yi = Yo + R\ cos(\varnothing_i)$$

where $\varnothing_i = 2\pi * (i / N)$.

In the next step (32) an array S(i) containing the set of image intensities from the picture elements (pixels) whose co-ordinates lie on the circular path (Xi,Yi) is created.

The next step (34) finds the maximum (Smax) and minimum (Smin) values of the Data set S(i) and calculate a threshold St as follows:

$$St = (Smax + Smin)/2.$$

Figure 5 illustrates the data set and the threshold.

In the next step (36), there is calculated the index numbers i1 and i2 of the data set Si whose image intensities are closest to the threshold and hence represent the angular positions around the circular scan closest to the two edges of the shadow. This identifies the location of the region where intensity is reduced and hence the location of the shadow.

Then, in the next step (38) the angle of the shadow with respect to the gnonom centre is estimated as follows:

$$\varnothing_{shadow} = \pi * (i1+i2) / N$$

This process is then iteratively repeated (40) by successively increasing radii and averaging the resultant $\varnothing_{shadow}$ values to improve the estimate. To determine the appropriate maximum number of iterations at increasing radii the width of the gnonom image W is estimated from the i1 and i2 values:

$$W \sim (2 * \pi * R) * (i2-i1) / N\ where\ i2 > i1a.$$

This estimate is then compared with the known value of the gnomon image width. When the calculated image width deviates significantly from the known gnomon image width the iterative process is stopped. The radius at which the iterative process is stopped gives an estimate of the length of the gnonom shadow.

This can be compared with the expected length of the gnomon shadow as calculated by the sun position algorithm to ensure the solar compass processes the correct shadow, in the case that there is more than one shadow due to other light sources.

A number of useful refinements to the digital solar compass can be made as follows:

a) Inclinometers can be integrated into the digital solar compass to automatically correct the DSC azimuth value for the case where the DSC imaging plane is not perfectly horizontal.

b) A digital magnetic compass (DMC) can be incorporated into the DSC. The DMC heading can be used both to speed up the algorithm described in 3. above by restricting the circular scan to around the rough estimate of heading given by the DMC as well as providing backup azimuth heading data either during the night or when the sun is obscured and does not case a shadow.

c) In addition, during the daytime, the DSC can be used to significantly improve the normal DMC calibration process by providing a high accuracy estimate of the absolute heading as the combined DSC/DMC module is rotated to calibrate the DMC.

d) An inertial measurement unit (IMU) can be incorporated into the DSC and the DSC absolute heading used to calibrate the drift of the IMU and hence increase its accuracy. The IMU can then be used to provide more accurate heading data than it would otherwise be able to provide when the DSC is unable to find a solution (e.g. the sun is obscured).

These refinements can be added individually or together and the data from the three sensors: DMC, IMU and DSC fused using for example a Kalman filter to give a heading estimate whose accuracy is optimised at all times even when the sun is not visible.

For solar power applications, it is often required to provide a drive signal to steer solar concentrator type arrays towards the sun to maximise solar power collection efficiency.

If the digital solar compass is mounted appropriately on a concentrator solar array, the measured shadow angle output ($\Phi_{SM}$) provides a direct measurement of the relative angle of the sun with respect to the compass mechanical reference and hence solar array and so can be used as an error signal to drive the solar array servo system.

A prototype system was manufactured using a low resolution webcam (640x480 pixels) together with a digital magnetic compass and an inertial measurement module.

The performance was measured with the system mounted on a test pillar using calibrated survey reference points using a digital goniometer.

Each video frame captured was processed separately.

The processing method used in this embodiment differed slightly from that discussed above.

Firstly, an initial circular scan path is computed, centred on the image of the base of the gnonom and of radius slightly bigger than the gnonom;

A set of image intensities around the scan path is computed and a thresholding operation used to identify the edges of the shadow;

Interpolation is used to identify, with sub pixel accuracy, the precise focal plane coordinates of the threshold crossing point at each edge of the shadow: i.e. (Xedge1,Yedge1) and (Xedge2,Yedge2). The smooth slope of intensity yielded by the back projection imaging approach helps with this process.

The distance between the two threshold crossing points, equivalent to the width of the shadow, is computed where:

$$\text{WidthEstimate} = \text{sqrt}(\ (\text{Xegde2} - \text{Xedge1})^2 + (\text{Yedge2-Yedge1})^2\ )$$

If the width estimate deviates from the expected shadow width at the current radius by more than a predefined amount, this may be due either to a poor image or the scan getting towards the end of the shadow. In this case the current scan data is rejected and a width error count variable incremented. If the width estimate is satisfactory, the width error count variable is reset to zero.

The scan radius is incremented (typically by 1 pixel) and additional scan data sets collected until the width error count becomes too large (more than 3 was used in the prototype).

A least squares estimate is used to calculate the slope of the each of shadow edges from the corresponding sets of data points;

$$\text{Edge1: } (\text{Xedge1},\text{Yedge1})_1,\ (\text{Xedge1},\text{Yedge1})_2,\ \ldots\ (\text{Xedge1},\text{Yedge1})_N$$

$$\text{Edge2: } (\text{Xedge2},\text{Yedge2})_1,\ (\text{Xedge2},\text{Yedge2})_2,\ \ldots\ (\text{Xedge2},\text{Yedge2})_N$$

The average of the two edge slopes is taken as the best estimate of the slope of the shadow, which is equal to the angle of the shadow with respect to the focal plane.

Note that although this algorithm as described above uses a circle, the least squares approach allows the use of other shapes of loop around the gnomon to carry out the calculation. For example, a square or rectangular loop may be used which avoids the need for trigonometric calculations to calculate the position of a circle.

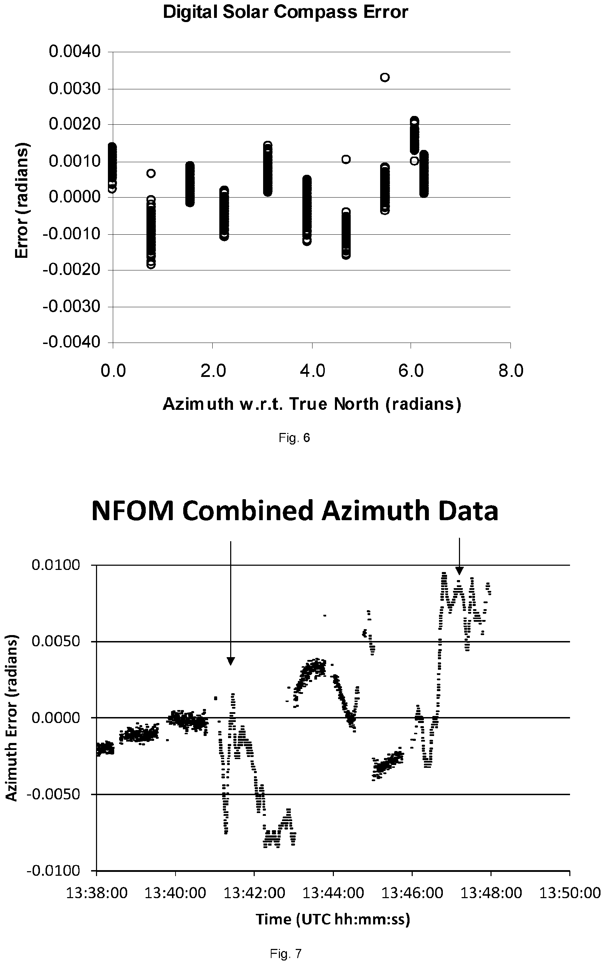

Results achieved using this approach are shown in Figure 6. The standard deviation of measurements at any one position was between 0.3 mrad and 0.5 mrad and the standard deviation of results overall was 0.8 mrad confirming the accuracy of the technology.

It was found that this algorithm gave more accurate results than the algorithm described above, albeit at the expense of more processing time. In addition, the least squares algorithm can be configured to provide an estimate of the standard error in slope, which is useful as a measure of the accuracy of each measurement.

A very important consideration is the ability of the sensor to detect and reject unreliable results that occur when the sun is obscured by cloud or there is fog. It was found that an effective way of achieving this was to calculate the shadow contrast for each circular scan data set, estimated as follows:

ShadowContrast = (Max - Min) / Threshold

Where: Max = maximum signal level

Min = minimum signal level

Threshold = threshold level used.

If ShadowContrast is too low, the measurement should be rejected as unreliable.

Other techniques, such as setting a limit for the total proportion of width errors, could also be used.

The theory above assumes a gnomon that is perpendicular to the plane of the image sensor. In practice, manufacturing and assembly tolerances mean the gonom will not be exactly perpendicular. In the prototype, the gnomon tilt from perpendicular was measured as 11 mrad (0.63°). This tilt introduces an error in the measured angle that is dependant upon the sun's elevation and which was measured and corrected for to deliver the best results.

The prototype included an additional web cam based optical channel for observation of celestial bodies to provide a night time northfinding capability.

The concept here is to use the telescope to align the optical axis on a bright star and then use the digital magnetic compass and inertial sensors to provide an initial coarse estimate of the telescope line of sight.

Combined with the observer time and location and an ephemerus (star catalogue), this coarse estimate of line of sight plus the known field of view of the sensor and the anticipated DMC and IMU errors, can be used to identify the bright celestial body (star or planet) which the sensor is aligned with and hence derive an accurate orientation for the sensor line of sight.

The process can be simplified for the user to avoid the need for precise alignment of the optical axis on the bright star by determining the location of the image of the brightest celestial body on the sensor focal plane and using the magnification and knowledge of the pixel spacing to work out the angular offset between the optical axis and the bright body and hence to correct for the misalignment.

Analysis of the star catalogue shows that if the accuracy of the coarse estimate is of the order of one degree then for visible stars, the probability of ambiguity (i.e. two bright stars within one degree angular separation) is very small. In any case, this can be overcome by using a field of view that allows both stars to be imaged and extending the process to take account of the relative positions of the two stars, rather than just one.

The benefit of this approach in comparison to standard star trackers is that the a *priori* coarse estimate of orientation substantially avoids the need for complex pattern recognition algorithms, as typically used in star trackers.

Figure 7 shows a combined approach. For much of the time the digital solar compass gave good results. In these periods, the digital solar compass was used to calibrate the DMC and IMU. However, during two periods, indicated with arrows, clouds prevented measurement and the DMC and IMU were used during these periods.

By combining these approaches, the standard deviation of the azimuth error over the whole measurement period was reduced to 4 mrad. If only the IMU and DMC are used then 7 mrad error was achieved. Further, the peak error was reduced from 20 mrad to 10 mrad.

In addition, the technique can be added to existing hand held sensors (for example) by using their existing high performance primary imaging channel without needing an additional optical/imaging channel.

The prototype demonstrated that the combination of the data from solar compass, celestial compass, digital magnetic compass (DMC) and inertial measurement unit (IMU) including inclinometers provide a sensor whose accuracy is optimised.

In particular, during day, the effectiveness of the solar compass as a means of calibrating the digital magnetic compass has been shown, together with the benefits of the DMC and IMU in providing continuous data whilst the solar compass cannot.

The system delivered a standard deviation of measured azimuth of 1 mRad (0.056°) on a bright sunny day. On a cloudy day, the standard deviation varied between 2 mRad and 6 mRad.

Averaging between multiple video frames should allow still further improved results to be achieved.

The cover used to protect the gnomon does have an influence on the shadow. In the embodiments above a hemispherical profile was proposed. This works, but it is considered that alternative profiles, for example a section of a sphere, rather than a full hemisphere, may be preferable to minimise the effect on the shadow.

Further, alternative ways of calculating the position of the shadow may be adopted. One alternative algorithm is an image processing technique known as the "Canny Edge Detector". In this, an image is captured and then a 2 dimensional first derivative operator applied to highlight regions with high first derivatives, i.e. to locate a plurality of points at each edge. A least squares fit can then be applied to the located edge points, and the fit used to determine the angle.

Further, alternative detectors may be used. For example, if bespoke detectors are used, these may have pixels arranged in rings around a central location to provide a circular scan directly.

## Claims

1. A digital solar compass, comprising:

   a planar image sensor (5) for capturing an image;
   a gnomon (1) extending perpendicular to the plane of the image sensor; and
   a signal processor (14) arranged to determine the angle of a shadow cast by the gnomon (1) and the sun from the image captured by the planar image sensor.

2. A digital solar compass according to claim 1, wherein the gnomon (1) is mounted directly on the planar image sensor (5).

3. A digital solar compass according to claim 1, further comprising a diffuser sheet (2) on which the shadow of the gnomon (1) falls, and
   a lens (4) mounted between the diffuser sheet (2) and the image sensor (5) for projecting the image of the shadow on the diffuser sheet onto the image sensor.

4. A digital solar compass according to any preceding claim, wherein the signal processor is arranged:

   to calculate the locus of a loop around the centre of the image of the base of the gnomon;
   to determine the intensity around the loop; and
   to locate the region where the intensity is reduced to determine the angle of the shadow.

5. A digital solar compass according to claim 4, wherein the loop is a circle, and the signal processor is arranged to determine the angle of a shadow by repeating the steps of calculating the locus of a circle around the centre of the image of the base of the gnomon, determining the intensity around the circle, locating the angle of the edges of the shadow and using the midpoint of the edges as the location of the shadow for a plurality of circles of different radii.

6. A digital solar compass according to any of claims 1 to 4, wherein the signal processor is arranged to detect the location of a plurality of points along the edge of the shadow, fit a straight line using a fit to the location of the plurality points, and to calculate the angle of the shadow from the fit.

7. A digital solar compass according to claim 6, wherein the signal processor is arranged to detect the location of a plurality of points along each edge of the shadow, to fit a straight line to each edge and calculating the angle of the shadow from each fit and to average the angles to obtain the angle of the shadow.

8. A digital solar compass according to any preceding claim, further comprising a transparent cover (12) extending over the gnomon and image sensor.

9. A digital solar compass according to claim 8 wherein the transparent cover is an encapsulation (12) encapsulating the gnomon.

**10.** A digital solar compass according to any preceding claim further comprising an inclinometer for automatically correcting for the case that the digital solar compass is not perfectly horizontal.

**11.** A digital solar compass according to any preceding claim, further comprising a digital magnetic compass to obtain a measure of the direction of magnetic north.

**12.** A digital solar compass according to any preceding claim, further comprising an inertial measurement unit, wherein the digital solar compass is arranged to calibrate the drift of the IMU and hence increase its accuracy

**13.** A method of determining the angle of the sun with respect to a digital solar compass having a planar image sensor and a gnomon extending perpendicular to the plane of the image sensor; the method comprising:

forming a shadow of the gnomon on the image sensor;
capturing the image on the image centre;
detecting the location of a plurality of points along the edge of the shadow;
fitting a straight line using a fit to the location of the plurality points, and
calculating the angle of the shadow from the fit.

**14.** A method according to claim 13, further comprising:

repeating the steps of detecting the location of a plurality of points along the edge of the shadow, fitting a straight line to the edge and calculating the angle of the shadow from the fit for both edges of the shadow, and averaging the angles to obtain the angle of the shadow.

**15.** A method according to claim 13, wherein the step of detecting the location of a plurality of points along the edge of the shadow uses a first derivative operator as an edge detector.

Time (9)

Location (10)

Shadow
Position
(11)

$\Phi_{SC}$= Calculated
shadow angle

$\Phi_C$= Solar
compass
orientation

Image
Acquisition
(7)

Image
Processing
(8)

$\Phi_{SM}$=
Measured shadow
angle

Fig. 1

Fig. 2

30

Calculate the set of co-ordinates Xi,Yi of a circular path of N steps, centered on the centre of the image of the gnomon (Xo,Yo), whose radius R is larger than the radius of the image of the gnomon:

$$Xi = Xo + R \sin(\emptyset_i)$$

$$Yi = Yo + R \cos(\emptyset_i)$$

32

Create an array S(i) containing the set of image intensities from the picture elements (pixels) whose co-ordinates lie on the circular path (Xi,Yi)

34

Find the maximum (Smax) and minimum (Smin) values of the Data set S(i) and calculate a threshold St as follows:

$$St = (Smax + Smin)/2$$

36

Identify the index numbers i1 and i2 of the data set Si whose image intensities are closest to the threshold and hence represent the angular positions around the circular scan closest to the two edges of the shadow.

38

Estimate the angle of the shadow with respect to the Gonom centre as follows:

$$\emptyset_{shadow} = \pi * (i1+i2) / N$$

40

Iterate the process above for successively increasing radii and average the resultant $\emptyset_{shadow}$ values to improve the estimate.

Fig. 3

Fig. 4

## Digital Solar Compass Error

Fig. 6

## NFOM Combined Azimuth Data

Fig. 7

EP 2 498 050 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Solar Position Algorithm for Solar radiation Applications. National Renewable Energy Laboratory